# EUROPEAN PATENT APPLICATION

(11) **EP 2 453 515 A1**
(43) Date of publication of application: **16.05.2012**
(21) Application number: 10290602.1
(22) Date of filing: 10.11.2010
(51) Int. Cl.: H01M 10/50, B60H 1/00

(54) **Vehicle cooling device, vehicle drive battery cooling assembly and method for manufacturing a vehicle cooling device**

(71) Applicant: Valeo Systèmes Thermiques, 78321 Le Mesnil Saint Denis (FR); Valeo Klimasysteme GmbH, 96476 Bad Rodach (DE)
(72) Inventor: Moreau, Sylvain, 72700 Spay (FR); Busson, François, 72220 Saint Gervais en Belin (FR); Ibrahimi, Nohmed, 72700 Allonnes (FR); Prevost, Jean Christoph, 72270 Ligron (FR); Haussmann, Roland, 68169 Wiesloch (DE)
(74) Representative: Vieillevigne, Sébastien Nicolas Bernard

(57) **Abstract**

The invention relates to a vehicle cooling device (14), in particular for a vehicle drive battery, with a cooling panel assembly (18) comprising a first and a second sheet of metal (20, 22). The two sheets of metal (20, 22) are bonded by a roll bond process, forming at least one bonding region (30) and at least one cooling fluid channel (34) is formed as a cavity (32) between the two sheets of metal (20, 22), the two sheets of metal (20, 22) being spaced apart in the region of the channel (34). The invention further relates to a method for manufacturing a vehicle cooling device (14).

## Description

The invention relates to a vehicle cooling device, in particular for a vehicle drive battery and a vehicle drive battery cooling assembly for cooling of a vehicle drive battery with at least one cooling surface. The invention further relates to a method for manufacturing a vehicle cooling device.

Vehicle cooling devices are for example known to cool vehicle drive batteries of hybrid or electric cars. In such vehicle cooling devices a cooling fluid is pumped through tubes which are in heat conducting contact with cooling plates which provide large surface areas which are pressed against cooling surfaces of the vehicle drive battery.

The object of the invention is to provide a vehicle cooling device and a vehicle drive battery cooling assembly which are compact and require little installation space, as well as a method for manufacturing a vehicle cooling device which allows simple and low cost manufacture of the vehicle cooling device.

This is solved by the vehicle cooling device according to the invention, in which the vehicle cooling device, in particular for a vehicle drive battery, has a cooling panel assembly comprising a first and a second sheet of metal, wherein the two sheets of metal are bonded, i.e. by a roll bond process, at at least one bonding region. At least one cooling fluid channel is formed as a cavity between the two sheets of metal, the two sheets of metal being spaced apart in the region of the channel. Since the cooling fluid channel is an integral part of the cooling panel, the cooling assembly requires minimal installation space and offers excellent heat transfer between the cooling fluid in the cooling fluid channel and the cooling panel assembly with the first and second sheet of metal.

Preferably the first or second sheet of metal has an outer surface defining an in particular at least partially planar heat transfer surface at the at least one bonding region. The level heat transfer surface allows direct heat transfer between an object to be cooled which rests against the heat transfer surface.

To ensure good contact between a surface of the battery to be cooled and the vehicle cooling device, the cooling fluid channel may be formed so that no portion of the cooling fluid channel projects from an envelope surface of the heat transfer surface.

It is possible that the heat transfer surface has a depression in the region of the cooling channel, said depression being defined by a deformation of the sheet of metal defining the heat transfer surface, said deformation in particular having a wave-shaped cross-section. This arrangement ensures for example that the cooling channel is positioned at a distance from the envelope surface of the heat transfer surface even if the channel is deformed under temperature or pressure changes. Further, the deformation increases the stability of the wall portion of the sheet metal.

In order to limit deformation of the cooling fluid channel under a wide range of temperature and pressure, both sheets of metal preferably have a finite radius of curvature in the region of the cooling fluid channel.

In order to increase the throughput of cooling fluid, a plurality of fluid channels may be arranged in parallel.

In order to facilitate equal distribution of cooling fluid in the plurality of cooling fluid channels a cooling fluid distribution system and/or collector system is preferably formed in the cooling panel assembly.

To allow mixing of a phase mix cooling fluid, the cooling fluid distribution system may comprise a baffle element which is formed by a bonding region of the two sheets of metal.

The invention further relates to a vehicle drive battery cooling assembly for cooling of a vehicle drive battery having at least one battery cooling surface. The vehicle drive battery cooling assembly comprises a cooling fluid loop and a vehicle cooling device as described above, wherein the cooling panel assembly has a heat transfer surface to contact the battery cooling surface of the vehicle drive battery over a large surface area of the complete cooling surface.

The object of the invention is further solved by a method for manufacturing a vehicle cooling device, in particular a cooling device as described above, comprising the steps of providing a first sheet of metal with a first contact surface and a heat transfer surface and a second sheet of metal with a second contact surface, roll bonding of the first and the second sheets of metal, wherein the first and second contact surfaces are partially bonded, forming at least one bonding region and at least detachment region, and forming of at least cooling fluid channel, wherein the pressurized fluid is applied in between the first and second sheets of metal in the detachment region to deform the first and/or second sheet of metal. This manufacturing method allows simple and inexpensive manufacture of the vehicle cooling device while allowing great flexibility in the design of the vehicle cooling device.

To allow complex geometries of the bonding and detachment regions, the method may further comprise the step of applying a separating agent to the contact surface in the detachment region of a first and/or second sheet of metal before roll bonding.

In order to prevent the first or second sheet of metal to protrude from an envelope surface of the heat transfer surface after formation of the cooling fluid channel, the method may further comprise the step of deforming the first and second sheets of metal after roll bonding, wherein a depression is formed in the detachment region. This excludes the effect that high fluid pressure in the fluid channel leads to a deflection of the wall contacting the battery so that the sheet metal is partly pushed away from its contact with the battery leading to point or line contact with the battery.

Preferably the depth of the depression formed in the detachment region is greater than the height of the cooling fluid channel segment in the first sheet of metal.

The step of forming of the at least one cooling fluid channel may be performed in a die assembly which limits the deformation of the first and/or second sheet of metal, wherein the die associated with the first sheet of metal has a plane surface portion.

It is also possible, that the die associated with the first sheet of metal deforms the first sheet of metal to form the depression.

Further features and advantages of the invention are shown in the following descriptions and the following figures to which reference is made. The figures show:
- Figure 1 a schematic drawing of a vehicle drive battery cooling assembly according to the invention;
- Figure 2 a schematic cross section of a vehicle cooling device according to a first embodiment of the invention;
- Figure 3 a schematic top view of a vehicle cooling device according to a second embodiment of the invention;
- Figure 4 a schematic top view of a vehicle cooling device according to a third embodiment of the invention;
- Figure 5 a schematic top view of a vehicle cooling device according to a fourth embodiment of the invention;
- Figure 6 a schematic top view of a vehicle cooling device according to a fifth embodiment of the invention;
- Figure 7 a schematic top view of a vehicle cooling device according to a sixth embodiment of the invention; and
- Figure 8 a schematic top view of a vehicle cooling device according to a seventh embodiment of the invention; and
- Figure 9 a series of steps of a manufacturing method according to the invention.
- Figure 10a series of steps of a manufacturing method according to the invention.

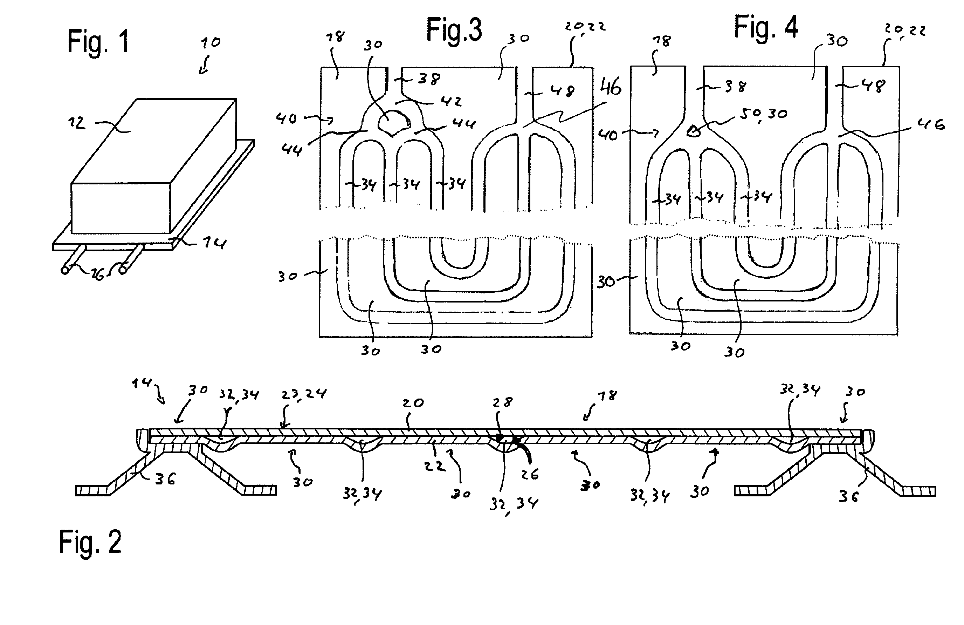

Figure 1 shows a vehicle drive battery cooling assembly 10 with a battery element 12, which has a planar battery cooling surface on its bottom side. The battery element 12 may be the complete vehicle drive battery, a battery module with a plurality of battery cells or a single battery cell. The battery cooling surface of the battery element 12 is in contact with a vehicle cooling device 14, which is connected to a cooling fluid loop 16, shown by two connecting tubes for the inflow and outflow of a cooling fluid. The vehicle cooling device 14 is operated with a phase changing cooling fluid and functions as an evaporator. However, it is also possible that the vehicle cooling device 14 is operated with a liquid cooling fluid, for example water or water/glycol mixtures.

Figure 2 shows a cross-section of the vehicle cooling device 14 in a first embodiment of the invention. A cooling panel assembly 18 comprises a first sheet of metal 20 and a second sheet of metal 22. The first sheet of metal 20 has an upper, outer surface 23 which defines a heat transfer surface 24 and a lower first contact surface 26 which faces the second sheet of metal 22. The second sheet of metal 22 has a second contact surface 28 which faces the first sheet of metal 20. The first and second sheets of metal 20, 22 are partially bonded, having several large surface bonding regions 30 in which the first and second contact surfaces 26, 28 are in direct contact.

The thickness of the first and second sheets of metal 20, 22 is preferably up to 1 mm. The first or the second sheet of metal could also have different thickness to allow or not their deformation during pressure step.

The material of the first and second sheets of metal is preferably aluminum. One of both sheet of metal could have a different alloy of aluminum to allow or not their deformation during pressure step.

In between the different bonding regions 30, the first and second sheet of metal 20, 22 are spaced apart from each other forming a cavity 32 which are arranged to form a cooling fluid channel 34.

The cooling panel assembly 18 is held on both sides by a fastening device 36. The fastening device 36 is made of resilient, elastic material in order to be able to bias the cooling panel assembly 18 against the cooling surface of the battery element 12. It is also possible, that the cooling panel assembly 18 is directly mounted on the battery cooling surface of the battery element 12.

Figure 3 shows a schematic top view of a second embodiment of the cooling panel assembly 18. A single cooling fluid inlet 38 leads to a cooling fluid distribution system 40. The distribution system 40 is designed to allow equal distribution of the cooling fluid phase mix to three different cooling fluid channels 34 arranged in parallel. In this embodiment, the distribution system 40 consists of a first branching 42 and set of second branchings 44. If more cooling fluid channels are desired, then more sets of branchings can be arranged in series.

The size of the cut section area of cooling fluid channels 34 formed in the same cooling panel assembly 18 could be different to improve the homogeneity of distribution. Indeed, the size of the cut section area could be distinct in order to obtain the same flow rate in each cooling fluid channel 34 of the cooling panel assembly 18.

The cooling fluid channels 34 are arranged in U-shape on the cooling panel assembly 18. At the end of the second leg of the U-shaped cooling fluid channels 34 a collector system 46 is provided which combines the three cooling fluid channels 34 into a single cooling fluid outlet 48.

By providing a plurality of cooling fluid channels 34 in the cooling panel assembly 18 the individual channels require less installation space while allowing the same flux of cooling fluid through the cooling panel assembly 18. Further, the geometric distribution of the plurality of cooling fluid channels on the cooling panel assembly 18 allows a more homogeneous temperature distribution and cooling efficiency.

Figure 4 shows a third embodiment of the cooling panel assembly 18 which is identical to the previous embodiment with the exception of the cooling fluid distribution system 40. Instead of providing a series of cooling fluid channel branchings, the distribution system 40 comprises a baffle element 50 which is formed by a bonding region 30 by the two sheets of metal 20, 22. The cooling fluid flowing through the cooling fluid inlet 38 is directed against the baffle element 50 creating a turbulent flow and mixing of the cooling fluid phase mix and subsequent distribution into the three different cooling fluid channels 34. The advantage of the distribution system 40 with the baffle element 50 is a reduced amount of area needed on the cooling panel assembly 18.

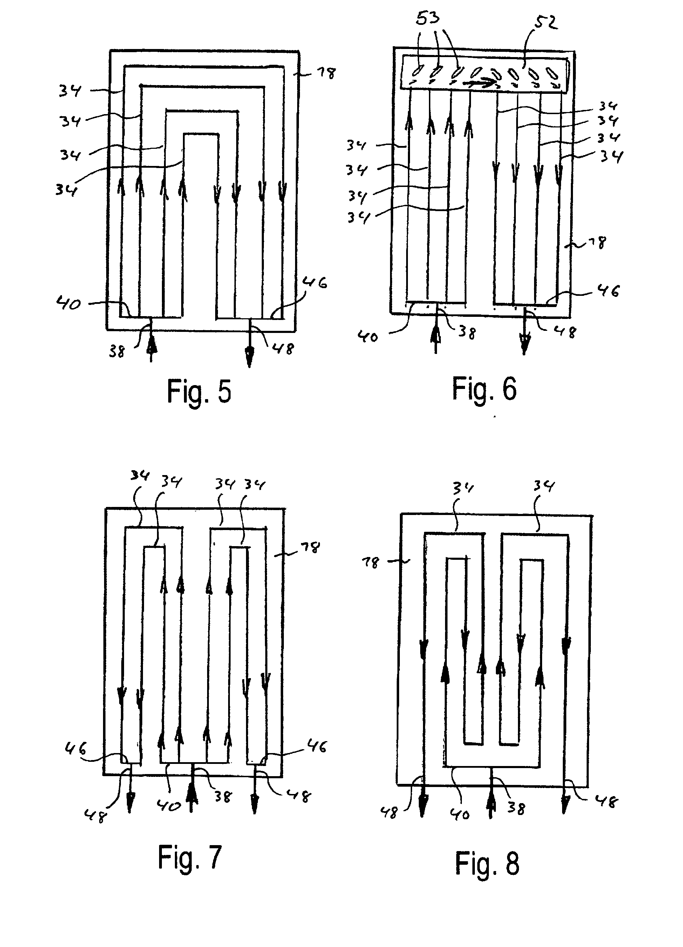

Figure 5 shows a schematic top view of a fourth embodiment of a cooling panel assembly 18. The cooling panel assembly 18 comprises a distribution system 40 and a collector system 46 which allow the distribution and collection of cooling fluid of four different cooling fluid channels 34 which are arranged in U-shape.

Figure 6 shows a fifth embodiment of a cooling panel assembly 18 in which a distribution system 40 supplies a first set of cooling fluid channels 34 with cooling fluid. The first set of cooling fluid channels 34 discharge into a mixing system 52 which collects the cooling fluid of the first set of cooling fluid channels 34 in order to mix and redistribute the cooling fluid to a second set of cooling fluid channels 34, in which the cooling fluid flows in opposite direction. A collector system 46 is arranged at the end of the second set of cooling fluid channels 34 which leads to the cooling fluid outlet 48. For increasing the mixing effect and also to increase the pressure resistance, declined portions 53 where the sheets are bonded to each other define walls within the chamber defining the mixing system.

Figure 7 shows a sixth embodiment of a cooling panel assembly 18 in which a distribution system 40 supplies four cooling fluid channels 34 with cooling fluid. The cooling fluid channels 34 form two sets of U-shaped cooling fluid channels 34, wherein the first leg of the U-shaped channels 34 is arranged in the center of the cooling panel assembly 18, and the second legs of the two sets of cooling fluid channels 34 are arranged on the edge of the cooling panel assembly 18, each leading to a collector system 46. This arrangement allows a more even temperature distribution.

Figure 8 shows a seventh embodiment of the invention in which a distribution system 40 provides two separate cooling fluid channels 34 with cooling fluid. The cooling fluid channels 34 are arranged in meandering fashion on the cooling panel assembly 18 wherein the beginning sections of the cooling fluid channels near the inlet 38 are situated in proximity of the end sections of the cooling fluid channel 34 near the outlet 48 which allows a more uniform distribution of temperature and cooling efficiency of the cooling panel assembly 18. An evolving size of channel from inlet to outlet could also be easily realize to decrease the internal pressure drop.

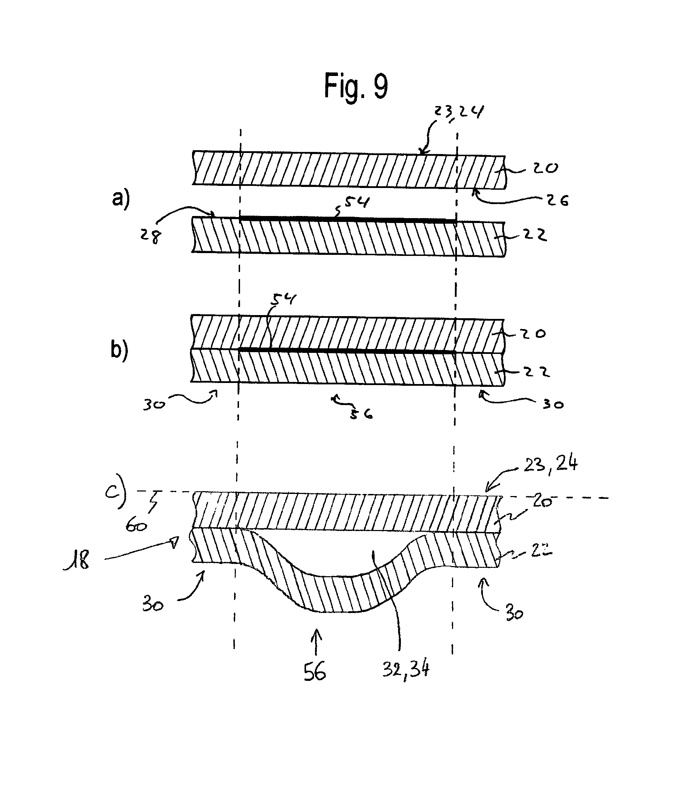

Figure 9 shows an illustration of the steps of the manufacturing method for the vehicle cooling device 14. In a first step of the method shown in section a) of Figure 9, the first and second sheets of metal 20, 22 are provided. The first sheet of metal 20 has a first contact surface 26 and a heat transfer surface 24. The second sheet of metal 22 has a second contact surface 28. The two sheets of metal 20, 22 are arranged so that the two contact surfaces 26, 28 face each other.

A layer of a separating agent 54 is applied to the contact surface 28 of the second sheet of metal 22. The separating agent 54 could also be applied to the first contact surface 26 and the first sheet of metal or both contact surfaces 26, 28. The separating agent 54 is applied in the regions of the sheets of metal 20, 22 in which the cooling fluid channels 34 are desired.

In the next step, shown in section b) of Figure 9, the first and second sheets of metal 20, 22 are bonded together by a roll bonding process. The first and second contact surfaces are partially bonded, forming bonding regions 30 in areas in which the first and second contact surfaces are not coated with the separating agent 54 and detachment regions 56, in which the first and second contact surfaces are not bonded together in the areas coated with the separating agent 54.

In a following step, the cooling fluid channels 34 are formed by applying a pressurized fluid between the first and second sheets of metal 20, 22 in the detachment region 56 to deform the second sheet of metal 22. Due to the pressure, the second sheet of metal 22 is plastically deformed outwardly, forming a cavity 32 in between the first and second contact surfaces 24, 26 on the first and second sheets of metal 20, 22. The second sheet of metal 22 has a finite radius of curvature in the region of the cooling fluid channel 34.

As can be seen in section c) of Figure 9, the cooling fluid channel 34 is formed so that no part of the cooling fluid channel projects from the envelope surface 60 of the heat transfer surface 24. Preferably the surface 60 is a plane.

The step of forming the cooling fluid channels 34 is performed in a die assembly which avoids the deformation of the first sheet of metal 20. It is possible that the die avoids the deformation of the first sheet of metal 20 to the geometry of the envelope surface.

In order to complete the action of the die assembly to avoid the deformation of the first sheet metal 20, the first sheet metal 20 is composed of an alloy of aluminum which is more resistant in pressure than the alloy of aluminum of the second sheet metal 22. In order to avoid the deformation of the first sheet metal 20, the material of the first sheet metal 20 is different from the material of the second sheet metal 22.

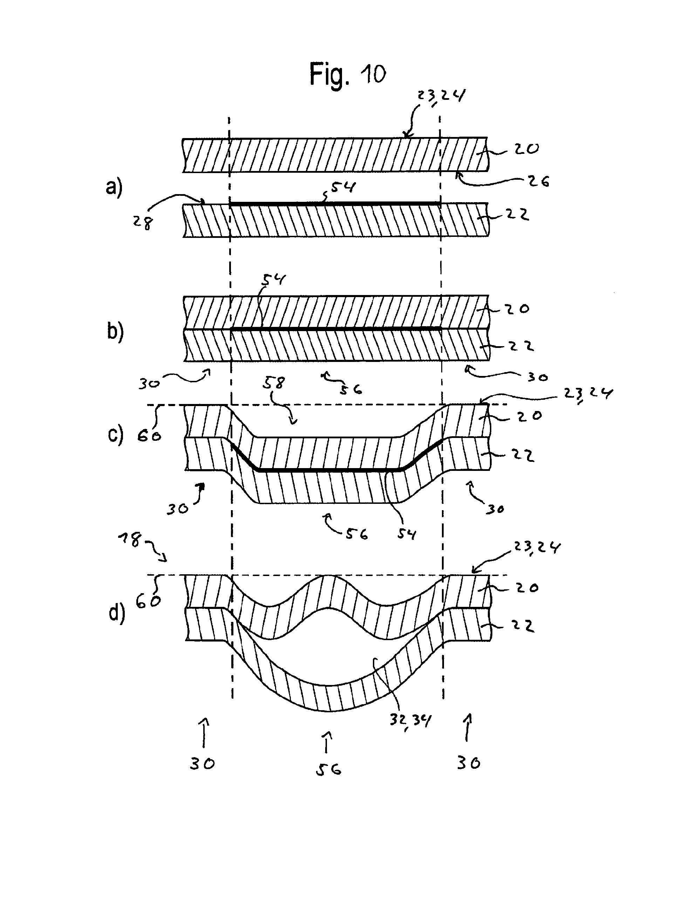

Figure 10 shows an illustration of the steps of the other manufacturing method for the vehicle cooling device 14. In a first step of the method shown in section a) of Figure 10, the first and second sheets of metal 20, 22 are provided. The first sheet of metal 20 has a first contact surface 26 and a heat transfer surface 24. The second sheet of metal 22 has a second contact surface 28. The two sheets of metal 20, 22 are arranged so that the two contact surfaces 26, 28 face each other.

A layer of a separating agent 54 is applied to the contact surface 28 of the second sheet of metal 22. The separating agent 54 could also be applied to the first contact surface 26 and the first sheet of metal or both contact surfaces 26, 28. The separating agent 54 is applied in the regions of the sheets of metal 20, 22 in which the cooling fluid channels 34 are desired.

In the next step, shown in section b) of Figure 10, the first and second sheets of metal 20, 22 are bonded together by a roll bonding process. The first and second contact surfaces are partially bonded, forming bonding regions 30 in areas in which the first and second contact surfaces are not coated with the separating agent 54 and detachment regions 56, in which the first and second contact surfaces are not bonded together in the areas coated with the separating agent 54.

After the roll bonding process the first and second sheets of metal 20, 22 are deformed wherein a depression 58 is formed in the detachment region 56, as is illustrated in section c) of Figure 10. The heat transfer surface 24 of the first sheet of metal 20 in the bonding regions 30 defines an envelope surface 60, which is shown in Figure 9 by a dashed line.

In a following step, the cooling fluid channels 34 are formed by applying a pressurized fluid between the first and second sheets of metal 20, 22 in the detachment region 56 to deform the first and second sheets of metal 20, 22. Due to the pressure, the first and second sheets of metal 20, 22 are plastically deformed outwardly, forming a cavity 32 in between the first and second contact surfaces 24, 26 on the first and second sheets of metal 20, 22. Both sheets of metal 20, 22 have a finite radius of curvature in the region of the cooling fluid channel 34.

As can be seen in section d) of Figure 10, the cooling fluid channel 34 is formed so that no part of the cooling fluid channel projects from the envelope surface 60 of the heat transfer surface 24. Preferably the surface 60 is a plane.

The depth of the depression 58 formed in the detachment region 56 is greater than the height of the cooling fluid channel segment of the first sheet of metal 20.

The step of forming the cooling fluid channels 34 is performed in a die assembly which limits the deformation of the first and second sheet of metal 20, 22. It is possible that the die limits the deformation of the first sheet of metal 20 to the geometry of the envelope surface or that the die defines predetermined radii of curvature for the first or second sheet of metal 20, 22.

In the embodiments presented in the Figures, the envelope surface of the heat transfer surface 24 is planar. However, the envelope surface 60 of the heat transfer surface 24 could also take other shapes, depending on the surface to be cooled of the battery element 12. For example, the envelope surface 60 could also be cylindrical.

The cooling fluid channel 34 is arranged so that it does not protrude from the envelope surface 60 under all operating conditions of the vehicle cooling device 14. Operating conditions are for example in a temperature range from -40°C to 80°C and pressures up to 26 bar.

## Claims

1. Vehicle cooling device (14), in particular for a vehicle drive battery, with a cooling panel assembly (18) comprising a first and a second sheet of metal (20, 22),
wherein the two sheets of metal (20, 22) are bonded, preferably by a roll bond process, at least one bonding region (30) and
at least one cooling fluid channel (34) is formed as a cavity (32) between the two sheets of metal (20, 22), the two sheets of metal (20, 22) being spaced apart in the region of the channel (34).

2. Vehicle cooling device (14) according to claim 1, wherein the first or second sheet of metal (20, 22) has an outer surface (23) defining an in particular at least partially planar heat transfer surface (24) at the at least one bonding region.

3. Vehicle cooling device (14) according to claim 2, wherein the cooling fluid channel (34) is formed so that no portion of the cooling fluid channel (34) projects from an envelope surface (60) of the heat transfer surface (24).

4. Vehicle cooling device (14) according to any of the preceding claims, wherein the heat transfer surface (24) has a depression (58) in the region of the cooling channel (34), said depression (58) being defined by a deformation of the sheet of metal (20) defining the heat transfer surface, said deformation in particular having a wave-shaped cross-section.

5. Vehicle cooling device (14) according to any of the preceding claims, wherein both sheets of metal (20, 22) have a finite radius of curvature in the region of the cooling fluid channel (34).

6. Vehicle cooling device (14) according to any of the preceding claims, wherein a plurality of cooling fluid channels (34) are arranged in parallel.

7. Vehicle cooling device (14) according to claim 6, wherein a cooling fluid distribution system (40) and/or collector system (46) is formed in the cooling panel assembly (18).

8. Vehicle cooling device (14) according to claim 6, wherein the cooling fluid distribution system (40) comprises a baffle element (50) which is formed by a bonding region (30) by the two sheets of metal (20, 22).

9. Vehicle drive battery cooling assembly (10) for cooling of a vehicle drive battery (12), having at least one battery cooling surface, comprising a cooling fluid loop and a vehicle cooling device (14) according to one of the previous claims, wherein the cooling panel assembly (18) has a heat transfer surface (24) to contact the battery cooling surface of the vehicle drive battery (12).

10. Method for manufacturing a vehicle cooling device (14), in particular according to one of the previous claims, comprising the steps:
- providing a first sheet of metal (20) with a first contact surface (26) and a heat transfer surface (24) and a second sheet of metal (22) with a second contact surface (28);
- roll bonding of the first and second sheets of metal (20, 22), wherein the first and second contact surfaces (26, 28) are partially bonded, forming at least one bonding region (30) and at least one detachment region (56); and
- forming of at least one cooling fluid channel (34), wherein a pressurized fluid is applied in between the first and second sheets of metal (20, 22) in the detachment region (56) to deform the first and/or second sheet of metal (20, 22).

11. Method according to claim 10, further comprising the step of applying a separating agent (54) to the contact surface (26, 28) in the detachment region (56) of the first and/or second sheet of metal (20, 22).

12. Method according to one of claims 10 and 11, further comprising the step of deforming the first and second sheets of metal (20, 22) after roll bonding, wherein a depression (58) is formed in the detachment region (56).

13. Method according to claim 12, wherein the depth of the depression formed in the detachment region (56) is greater than the height of the cooling fluid channel (34) segment of the first sheet of metal (20).

14. Method according to one of claims 10 to 13, wherein the step of forming of the at least one cooling fluid channel (34) is performed in a die assembly which limits the deformation of the first and/or second sheet of metal (20, 22), wherein the die associated with the first sheet of metal has a plane surface portion.

15. Method according to one of claims 10 to 14, wherein the die associated with the first sheet of metal deforms the first sheet of metal to form the depression.
